# FASCICULE DE BREVET EUROPEEN

(11) **EP 0 440 518 B1**
(45) Date de publication et mention de la délivrance du brevet: **22.12.1993**
(21) Numéro de dépôt: 91400120.1
(22) Date de dépôt: 18.01.1991
(51) Int. Cl.: F16D 3/84, F16D 3/06

(54) **Organe de retenue d'un joint d'étanchéité annulaire coulissant dans un système télescopique**
Halteorgan für einen Dichtungsring verschiebbar in einem teleskopischen System
Retaining device for a seal ring in a telescoping system

(30) Priorité: 22.01.1990 FR 9000700
(43) Date de publication de la demande: 07.08.1991
(73) Titulaire: GLAENZER SPICER, F-78301 Poissy (FR)
(72) Inventeur: Mangiavacchi, Jacques, F-78400 Chatou (FR); Brossard, Jean-Claude, F-78250 Meulan (FR)
(74) Mandataire: Phélip, Bruno

(56) Documents cités:
- FR-A- 2 312 696
- US-A- 4 592 556

## Description

La présente invention concerne un organe de retenue d'un joint d'étanchéité annulaire coulissant dans un système télescopique, notamment pour transmissions à Cardan, et comportant :
- des moyens d'immobilisation dudit joint contre l'extrémité d'un premier élément du système télescopique, lesdits moyens étant constitués par une coupelle annulaire engagée axialement sur l'extrémité dudit premier élément pour immobiliser une partie captive du joint au profit d'une partie libre en contact avec un second élément du système télescopique, grâce, d'une part, à un rebord périphérique axial de ladite coupelle qui est ancré dans une gorge périphérique du premier élément télescopique, et, d'autre part, à un bord tombant radial issu du rebord périphérique axial et maintenant axialement ledit joint contre l'extrémité du premier élément du système télescopique,
- des moyens d'évacuation d'une surpression, susceptible de régner à l'intérieur du système télescopique.

Il est connu des organes de retenue de joint sensiblement de ce type dépourvus de moyens d'évacuation de surpression, dans une version métallique, équipant actuellement les transmissions à Cardan. Ces organes présentent certaines faiblesses de conception pouvant amener des difficultés lors du montage des transmissions sur véhicules, voire, sous certaines conditions d'utilisation extrêmes, des détériorations du joint d'étanchéité.

En effet, un des inconvénients majeurs réside dans l'élévation de la pression à l'intérieur du système, se produisant lors d'une augmentation de la température ambiante et/ou de fonctionnement, lors d'une centrifugation du lubrifiant en présence dans le système lorsque la transmission est entraînée en rotation, lors d'un nouvel apport de lubrifiant par un graisseur monté à cet effet sur la transmission, ou lors d'une réduction du volume interne du système, provoquée par les mouvements dynamiques de la chaîne cinématique de la transmission du véhicule.

Les conséquences principales de cette élévation de pression sont : une augmentation des charges axiales nuisant au bon coulissement des éléments télescopiques avec des répercussions sur toute la chaîne cinématique, ce qui rend plus difficile le montage des transmissions sur véhicule, et, dans certains cas dynamiques extrêmes d'utilisation, ce qui occasionne des charges supplémentaires sur les roulements des organes accouplés ; une détérioration prématurée de l'étanchéité provoquée soit par une déformation de l'organe de retenue au niveau de son ancrage dans la gorge du premier élément télescopique et pouvant aller jusqu'à sa désolidarisation, de sorte que le joint n'est plus maintenu, soit, dans certains cas de coulissements dynamiques importants, ou même au montage de la transmission, par l'expulsion du joint s'échappant par l'espace annulaire subsistant entre le bord tombant radial de l'organe de retenue et le second élément du système télescopique.

Pour remédier à ces divers inconvénients, il a été proposé dans le document FR-A-2 312 696 un organe de retenue du type présenté ci-dessus, dans une version moulée en thermoplastique, se différenciant essentiellement du précédent en ce qu'il comporte lesdits moyens d'évacuation d'une surpression et qu'il est encliqueté élastiquement dans la gorge du premier élément télescopique, par déformation élastique radiale d'un bourrelet périphérique réalisé à l'intérieur du rebord périphérique axial de la coupelle constituant l'organe de retenue.

Ce dispositif permet d'assurer avec précision la compression du joint d'étanchéité entre la partie interne du bord tombant de la coupelle et la face d'extrémité du premier élément du système télescopique. En outre, l'organe de retenue ainsi réalisé comporte, obtenues de moulage, une pluralité d'ouïes réparties de façon équidistantes sur la périphérie interne de la coupelle, au voisinage de son rebord périphérique axial, et mettant en communication le fond de ladite coupelle avec l'air ambiant. Ainsi, les surpressions internes au système télescopique se trouvent expulsées au niveau de l'interface du joint et de l'extrémité du premier élément, puis par les ouïes.

L'application industrielle de ce type d'organe de retenue, sur des systèmes télescopiques de séries légères ou moyennes, a permis de mettre en évidence les difficultés et points faibles suivants.

D'abord, concernant la généralisation d'un tel organe de retenue, un problème réside dans qon application aux éléments télescopiques de gros diamètres, car afin de conserver audit organe une raideur et une inertie suffisantes à la tenue de son encliquetage (axial et centrifuge), il faut augmenter ses côtes (diamètres, épaisseurs). La réalisation d'un tel organe demande l'utilisation de presse d'injection de fort tonnage et des outillages d'éjection de forte puissance, pénalisant fortement le prix de revient dudit organe de retenue.

De plus, il a été constaté un taux de rupture non négligeable dû soit aux conditions d'assemblage de l'organe de retenue sur l'élément télescopique, soit à sa fragilité inhérente aux conditions de moulage, soit aux chocs extérieurs, par projections de pierres par exemple, dans les applications aux véhicules de chantier.

A également été constatée une perte d'efficacité du joint d'étanchéité en fonctionnement, sous l'effet de la force centrifuge, car il a tendance à se déformer dans les ouïes de la coupelle, provoquant ainsi le décollement de sa partie en contact avec le second élément du système télescopique sur lequel il coulisse, amenant une perte de lubrifiant lors de l'arrêt du véhicule, et en rotation, par pompage dynamique, une pénétration d'impuretés dans le système télescopique lors de coulissements.

Il est à noter aussi des possibilités de désencliquetage de l'organe de retenue, dues essentiellement à sa déformation provoquée par la proximité de sources de chaleur déformant et vieillissant la matière thermoplastique, ainsi que par la tendance des matières plastiques à absorber de l'eau, ce qui provoquer un gonflement de la coupelle réduisant son serrage autour du premier élément du système télescopique, et donc sa mise en rotation autour de ce premier élément, d'où une usure pouvant aller jusqu'à l'érosion complète du bourrelet périphérique entraînant la perte de l'organe de retenue du joint d'étanchéité.

Enfin, de tels organes de retenues en matière thermoplastique sont rarement réutilisables, lors d'interventions sur les transmissions, car leur démontage provoque généralement leur rupture ou leur détérioration partielle.

Le but de la présente invention est de remédier à ces divers inconvénients et de proposer un organe de retenue permettant : le maintien du joint d'étanchéité quelles que soient les conditions d'utilisation du système télescopique ; la réduction des efforts de trainée lors de déplacements axiaux par une fonction "soupape" à perte de charge contrôlée, tout en améliorant les conditions de fonctionnement du joint ; un assemblage, en premier équipement ou en rechange, fiable et robuste, donnant toutes les garanties d'une bonne fiabilité de l'étanchéité ; une possibilité de généralisation dans de bonnes conditions économiques et industrielles, en particulier sur toutes les gammes de transmissions.

A cet effet, l'invention concerne un organe de retenue d'un joint d'étanchéité annulaire coulissant dans un système télescopique, notamment pour transmissions à Cardan, et comportant :
- des moyens d'immobilisation dudit joint contre l'extrémité d'un premier élément du système télescopique, lesdits moyens étant constitués par une coupelle annulaire engagée axialement sur l'extrémité dudit premier élément pour immobiliser une partie captive du joint au profit d'une partie libre en contact avec un second élément du système télescopique, grâce, d'une part, à un rebord périphérique axial de ladite coupelle qui est ancré dans une gorge périphérique du premier élément télescopique, et, d'autre part, à un bord tombant radial issu du rebord périphérique axial et maintenant axialement ledit joint contre l'extrémité du premier élément du système télescopique,
- des moyens d'évacuation d'une surpression susceptible de régner à l'intérieur du système télescopique,

caractérisé en ce que la coupelle constituant l'organe de retenue comporte un épaulement périphérique rentrant situé entre le rebord périphérique axial de ladite coupelle et son bord tombant radial, lequel épaulement offre une face d'appui radiale, apte à constituer une butée axiale à l'extrémité du premier élément télescopique, et une face d'appui axiale, apte à assurer avec le bord tombant radial, le maintien du joint d'étanchéité dans sa partie captive, contre ladite extrémité. Avantageusement, la dimension axiale de la face d'appui axiale est choisie inférieure à la dimension axiale de la partie captive du joint d'étanchéité, afin que le maintien du joint soit assuré avec une compression prédéterminée résultant de la différence entre l'épaisseur du joint dans sa partie captive et la profondeur de l'épaulement périphérique qui est égale à la distance entre sa face d'appui radiale et la face interne du bord tombant radial.

La présente invention concerne également les caractéristiques ci-après, considérées isolément ou selon toutes leurs combinaisons techniquement possibles.

Selon une autre caractéristique de l'invention, l'épaulement périphérique comporte au moins un bossage creux sortant, percé d'une ouverture, apte à constituer une soupage à la surpression susceptible de régner à l'intérieur du système télescopique, et dont la membrane est constituée par la partie de joint en contact avec l'extrémité du premier élément télescopique, selon une compression prédéterminée en fonction du tarage de soupape à obtenir.

Selon une autre caractéristique de l'invention, la hauteur du bossage est sensiblement identique à la profondeur de l'épaulement.

Selon une variante de réalisation, la hauteur du bossage est inférieure à la profondeur de l'épaulement.

Selon une autre caractéristique de l'invention, l'ouverture du bossage est constituée par un trou circulaire.

Selon une variante de réalisation, l'ouverture du bossage est constituée par un crevé obtenu par découpe de trois côtés d'une languette quadrangulaire rabattue ensuite vers l'intérieur autour de son quatrième côté, pour assurer avantageusement, avec la face d'appui axiale de l'épaulement, un maintien complémentaire, partiel du joint d'étanchéité au droit des ouvertures des bossages.

Selon une autre caractéristique de l'invention, le bord tombant radial de la coupelle comporte sur sa périphérie interne une pluralité de doigts radiaux qui en sont issus, aptes à prolonger ledit bord tombant jusqu'à venir en contact avec une jupe du joint, constituant partiellement sa partie libre en contact avec le second élément du système télescopique, et assurer ainsi une continuité radiale de contact respectivement du bord tombant radial de la coupelle, de la jupe du joint et du second élément du système télescopique, de manière à interdire toute expulsion dudit joint entre son organe de retenue et le second élément télescopique.

Selon une autre caractéristique de l'invention, l'organe de retenue objet de l'invention est assemblé selon un procédé remarquable par les étapes suivantes :
- engagement et mise en butée sur une paroi du second élément du système télescopique, d'un poussoir cranté apte à venir en appui sur la face d'appui radiale externe de l'épaulement périphérique de la coupelle,
- engagement de la coupelle autour du second élément en indexant ses bossages dans les crans correspondants du poussoir,
- engagement du joint d'étanchéité autour du second élément jusqu'à sa mise en contact avec le fond interne du bord tombant de la coupelle,
- introduction par déplacement axial du second élément du système télescopique dans le premier,
- mise en contact de l'extrémité du premier élément avec un plan d'appui du joint d'étanchéité opposé à celui en contact avec le bord tombant radial de la coupelle et conséquemment, recouvrement de ladite extrémité par le rebord périphérique axial de la coupelle par coulissement,
- compression selon une valeur "d" du joint d'étanchéité jusqu'à la mise en appui de l'extrémité du premier élément télescopique sur la face d'appui radiale de l'épaulement périphérique de la coupelle,
- sertissage par déformation radiale ponctuelle ou périphérique du rebord axial de la coupelle, par refoulement dans la gorge périphérique ménagée à proximité de l'extrémité du premier élément télescopique.

L'invention sera encore illustrée sans être aucunement limitée, par la description qui suit, faite en regard des dessins annexés sur lesquels :

Figure 1 est une vue en demi-coupe longitudinale d'un système télescopique pour transmissions à Cardan muni d'un organe de retenue d'un joint selon l'invention.

Figure 2 est une vue partielle en coupe suivant une ligne II-II de la Figure 1.

Figure 3 est une vue en coupe suivant une ligne I-I de la Figure 2, représentant une phase initiale d'assemblage d'un organe de retenue selon l'invention.

Figure 4 est une vue en coupe suivant une ligne I-I de la Figure 2, représentant une phase intermédiaire d'assemblage d'un organe de retenue selon l'invention.

Figure 5 est une vue en coupe suivant une ligne V-V de la Figure 2, représentant une phase finale d'assemblage d'un organe de retenue selon l'invention.

Figure 6 est une vue en coupe analogue à la Figure 4, pour une première variante de réalisation de l'organe de retenue.

Figure 7 est une vue en coupe analogue à la Figure 4, pour une seconde variante de réalisation de l'organe de retenue.

Figure 7a est une vue en coupe suivant la ligne VIIa-VIIa de la Figure 7.

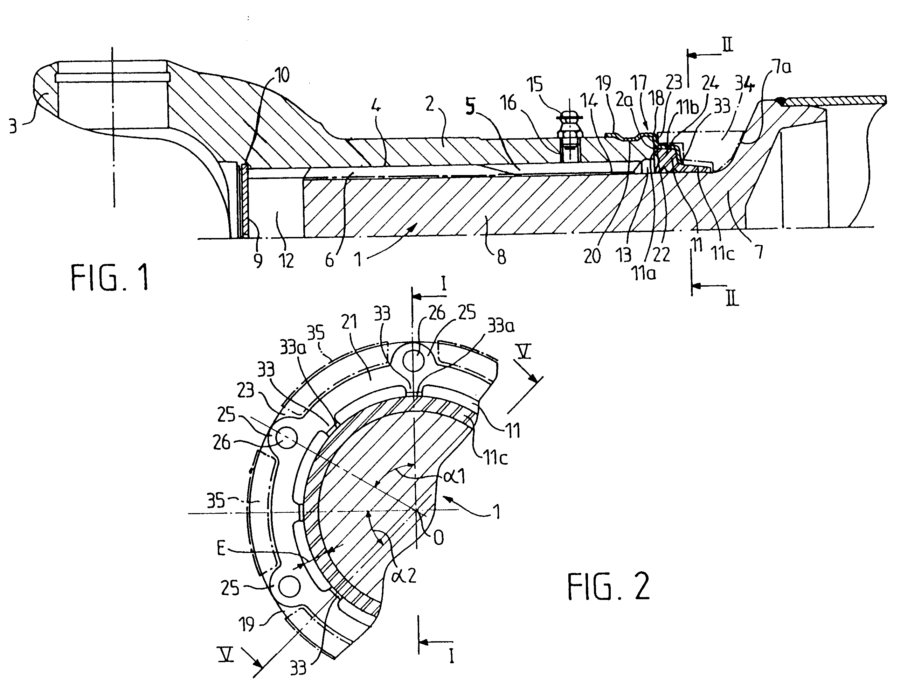

Selon un exemple d'application représenté à la Figure 1, un système télescopique 1 désigné dans son ensemble se compose d'un premier élément 2 constitué par une machoire 3 à coulisse représentant une partie d'une transmission à Cardan, et comportant un fourreau cylindrique 4 dont l'alésage comporte des cannelures internes longitudinales 5 coopérant en coulissement avec des cannelures externes longitudinales correspondantes 6 d'un second élément 7 ou embout coulissant du système télescopique, lesdites cannelures 6 étant ménagées sur un collet cylindrique 8 dudit embout coulissant 7, apte à coulisser dans le fourreau 4 du premier élément 2. L'ensemble ainsi constitué est obturé d'un côté, vers la machoire 3, par une capsule 9 sertie dans un chambrage 10 réalisé dans le fourreau 4, et, du côté opposé à la machoire 3, par un joint d'étanchéité 11, constituant ainsi une chambre à volume variable 12 communiquant avec une partie évasée 13, réalisée à proximité de l'extrémité 2a de l'élément 2, par l'intermédiaire d'une chambre 14 prévue entre les cannelures 5 et entre le fourreau 4 et le collet 8.

Un graisseur 15 lubrifie le système télescopique par l'intermédiaire d'une ouverture 16 pratiquée à proximité de l'extrémité 2a de l'élément 2 et en communication avec les volumes 12, 13, 14.

Le joint d'étanchéité 11 désigné dans son ensemble est monté sur le second élément 7 du système télescopique par coulissement axial sur son collet cylindrique 8. Le joint 11 est rendu solidaire en déplacement du premier élément 2 du système télescopique grâce à un organe de retenue 17, désigné dans son ensemble, comportant des moyens d'immobilisation dudit joint 11 contre l'extrémité 2a dudit premier élément 2.

Les moyens d'immobilisation sont constitués par une coupelle 18 engagée axialement sur l'extrémité 2a dudit premier élément 2 pour immobiliser une partie captive 11b du joint 11 au profit d'une partie libre 11c en contact avec le second élément 7, grâce, d'une part, à un rebord périphérique axial 19 de ladite coupelle 18, ancré par sertissage dans une gorge périphérique 20 du premier élément télescopique 2, et, d'autre part, à un bord tombant radial 21 issu dudit rebord périphérique axial 19 et maintenant axialement ledit joint 11 contre l'extrémité 2a du premier élément 2 du système télescopique.

Conformément à l'invention, la coupelle 18 est obtenue par emboutissage d'une tôle. Elle constitue l'organe de retenue 17 et comporte un épaulement périphérique rentrant 22, ménagé entre le rebord périphérique axial 19 de ladite coupelle 18 et son bord tombant radial 21.

L'épaulement 22 offre ainsi une face d'appui radiale 23, apte à constituer une butée axiale à l'extrémité 2a du premier élément télescopique 2, et une face d'appui axiale 24, apte à assurer avec le bord tombant radial 21, le maintien du joint 11 dans sa partie captive 11b, contre ladite extrémité 2a, selon une compression prédéterminée.

Cette compression prédéterminée résulte de la différence "d" entre l'épaisseur "L" au repos du joint 11 dans sa partie captive 11b et la profondeur "l" de l'épaulement périphérique 22 qui est égale à la distance entre sa face d'appui radiale 23 et la face interne du bord tombant radial 21.

Selon une autre caractéristique de l'invention, l'épaulement périphérique 22 comporte une série de six bossages 25 espacés angulairement d'un angle 1 de 60°. Ces bossages sont également obtenus par emboutissage au cours d'une même opération avec la coupelle 18. Les bossages 25 sont obtenus en creux et en saillie vers l'extérieur par rapport à l'épaulement 22, et sont percés d'un trou circulaire 26 constituant une ouverture de manière à être apte à constituer une soupape d'échappement de la surpression susceptible de régner à l'intérieur du système télescopique, en l'occurrence dans les volumes 12, 13, 14, soupape dont la membrane régulatrice d'ouverture est constituée par la partie 11a de joint 11 en contact avec l'extrémité 2a du premier élément télescopique 2, selon une compression prédéterminée en fonction du tarage de soupape à obtenir.

Selon l'exemple de réalisation représenté sur les Figures 1 à 5, la hauteur P des bossages 25 est identique à la profondeur de l'épaulement 22;

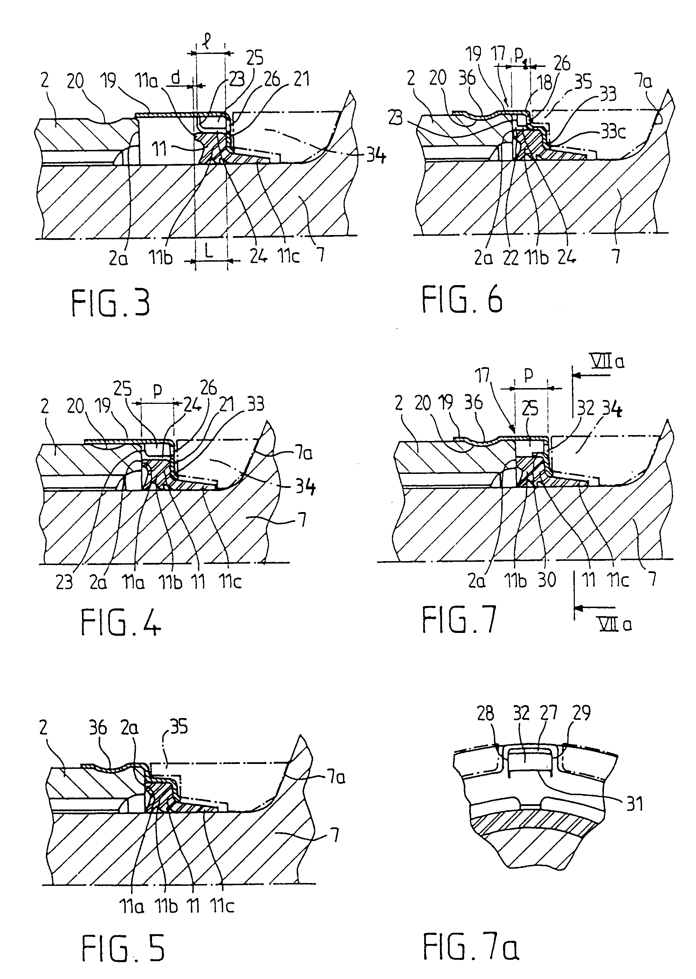

Selon une variante de réalisation représentée à la Figure 6, la hauteur P₁ des bossages 25 est réduite par rapport à la profondeur de l'épaulement 22, permettant ainsi de reconstituer un centrage périphérique du joint 11 dans la coupelle au droit desdits bossages 25.

Selon une autre variante de réalisation (Figure 7), l'ouverture 32 des bossages 25 est constituée par un crevé obtenu par découpe de trois côtés 27, 28, 29 d'une languette quadrangulaire 30 rabattue ensuite vers l'intérieur autour de son quatrième côté 31, afin d'assurer avantageusement, avec la face d'appui axiale 24 de l'épaulement 22, un maintien complémentaire, mais partiel du joint d'étanchéité 11 au droit des ouvertures 32 des bossages 25.

Selon une autre caractéristique de l'invention, le bord tombant radial 21 de la coupelle 18 comporte sur sa périphérie interne dirigée vers l'axe O du système télescopique, une pluralité de doigts radiaux 33 qui en sont issus.

Ces doigts radiaux 33 sont aptes à prolonger ledit bord tombant 21 jusqu'à venir en contact avec la partie libre 11c du joint 11 constituée par une jupe s'étendant axialement sur le second élément 7 du système télescopique.

Ainsi, les doigts radiaux 33, espacés angulairement d'un angle 2 égal à 45° dans le présent exemple, assurent une continuité radiale de contact, respectivement du bord tombant radial 21 de la coupelle 18, de la jupe 11c du joint 11 et du second élément 7 du système télescopique. De cette manière est interdite toute expulsion du joint 11 au travers de l'espace E délimité entre le second élément 7 et la périphérie interne du bord tombant radial 21 de la coupelle 19.

Les doigts radiaux 33 comportent à leur extrémité libre une partie 33a recourbée en direction sensiblement axiale, apte à expanser le profil de la jupe 11c du joint 11, afin de ne pas le blesser.

Un procédé d'assemblage d'un organe de retenue ainsi défini est remarquable par les étapes suivantes :
- engagement et mise en butée sur une paroi 7a du second élément 7 du système télescopique, d'un poussoir annulaire cranté 34, apte à venir en appui sur la face d'appui radiale externe 23 de l'épaulement périphérique 22 de la coupelle 18,
- engagement de la coupelle 18 autour du second élément 7 en indexant ses bossages 15 dans les crans 35 correspondants du poussoir 34,
- engagement du joint d'étanchéité 11 autour du second élément 7 jusqu'à sa mise en contact avec le fond interne du bord tombant 21 de la coupelle 18,
- introduction par déplacement axial du second élément 7 du système télescopique dans le premier 2,
- mise en contact de l'extrémité 2a du premier élément 2 avec un plan d'appui 11a du joint d'étanchéité 11 opposé à celui en contact avec le bord tombant radial 21 de la coupelle 18 et, conséquemment, recouvrement de ladite extrémité 2a par le rebord périphérique axial 19 de la coupelle 18 par coulissement,
- compression selon une valeur "d" du joint d'étanchéité 11 jusqu'à la mise en appui de l'extrémité 2a du premier élément télescopique 2 sur la face d'appui radiale 23 de l'épaulement périphérique 22 de la coupelle 18,
- sertissage par déformation radiale 36 ponctuelle ou périphérique du rebord axial 19 de la coupelle 18, par refoulement dans la gorge périphérique 20 ménagée à proximité de l'extrémité 2a du premier élément télescopique 2.

L'ensemble coupelle 18 et joint d'étanchéité 11 ainsi serti sur le premier élément 2 est parfaitement étanche tout en assumant une fonction "soupape" dont le tarage est maîtrisé par la valeur "d" choisie pour la compression élastique de la partie captive 11b du joint 11.

Cette compression élastique, constante, par dimension et par type de système télescopique, permet d'avoir une perte de charge contrôlée, maintenant le lubrifiant dans le système pour des conditions normales d'utilisation du coulissement.

Lorsqu'une élévation de pression se produit, due, par exemple aux déplacements dynamiques importants d'un élément par rapport à l'autre, ou lors de l'apport de lubrifiant par le graisseur, et que cette pression est supérieure aux conditions de tarage prédéterminées, un décollement du joint 11 se produit au niveau de l'interface 2a, 11a, respectivement de l'extrémité de l'élément 2 et de la face d'appui du joint 11, permettant le passage de l'air et/ou de l'excédent de lubrifiant par les ouvertures 26, 32 des bossages 25 de la coupelle 18 constituant l'organe de retenue 17.

Enfin, lors d'un mouvement opposé des éléments 2, 7, créant une dépression à l'intérieur du système, l'interface 2a, 11a se ferme sous l'effet de la pression atmosphérique et de l'élasticité de la partie captive 11b du joint 11, empêchant l'introduction d'impureté, pouvant nuire au bon fonctionnement du système télescopique.

Le démontage de l'ensemble d'étanchéité se fait à l'aide d'un jet et d'une massette en frappant sur l'extrémité du rebord périphérique axial 19 de la coupelle 18 jusqu'à sa complète éjection. Sa remise en place s'effectuera comme décrit précédemment.

Il est intéressant de noter que le poussoir 34 présente l'avantage d'être utilisable, en premier équipement ou en réparation, non seulement comme outil de mise en place de l'ensemble d'étanchéité, mais aussi comme butée d'appui pour l'emmanchement du tube des transmissions, ce qui permet de réduire sensiblement le nombre d'outillages (cloches de montage variant en fonction de la longueur de coulissement et le diamètre des cannelures) à un seul poussoir par dimension d'organe de retenue, de faciliter la manipulation (outillage plus léger), de simplifier la procédure d'assemblage des transmissions sur presse (avec les cloches de montage, cela nécessite de prendre la réaction d'emmanchement sur le bâti machine) et de diminuer les coûts de revient fabrication (outillage et gamme d'assemblage).

les signes de références insérés après les caractéristiques techniques mentionnés dans les revendications ont pour seul but de faciliter la compréhension de ces dernières et n'en limitent aucunement la portée.

## Revendications

1. Organe de retenue d'un joint d'étanchéité annulaire coulissant (11) dans un système télescopique (1), notamment pour transmissions à Cardan, et comportant :
- des moyens d'immobilisation dudit joint (11) contre l'extrémité (2a) d'un premier élément (2) du système télescopique (1), constitués par une coupelle annulaire (18) engagée axialement sur l'extrémité (2a) dudit premier élément (2) pour immobiliser une partie captive (11b) du joint (11) au profit d'une partie libre (11c) en contact avec un second élément (7) du système télescopique, grâce, d'une part, à un rebord périphérique axial (19) de ladite coupelle (18), qui est ancré dans une gorge périphérique (20) du premier élément télescopique (2), et, d'autre part, à un bord tombant radial (21) issu du rebord périphérique axial (19) et maintenant axialement ledit joint (11) contre l'extrémité (2a) du premier élément (2) du système télescopique,
- des moyens d'évacuation d'une surpression susceptible de régner à l'intérieur du système télescopique (1), caractérisé en ce que la coupelle (18) constituant l'organe de retenue (17) comporte un épaulement périphérique rentrant (22) situé entre le rebord périphérique axial (19) de ladite coupelle (18) et son bord tombant radial (21), lequel épaulement (22) offre une face d'appui radiale (23), apte à constituer une butée axiale à l'extrémité (2a) du premier élément télescopique (2), et une face d'appui axiale (24), apte à assurer avec le bord tombant radial (21), le maintien du joint (11) d'étanchéité dans sa partie captive (11b), contre ladite extrémité (2a).

2. Organe de retenue selon la revendication 1, caractérisé en ce que ledit joint (11) est maintenu dans sa partie captive (11b) contre ladite extrémité (2a) avec une compression prédéterminée résultant de la différence (d) entre l'épaisseur (L) du joint dans sa partie captive et la profondeur (l) de l'épaulement périphérique (22) qui est égale à la distance entre sa face d'appui radiale (23) et la face interne du bord tombant radial (21).

3. Organe de retenue selon l'une des revendication 1 et 2, caractérisé en ce que l'épaulement périphérique (22) comporte au moins un bossage (25) creux sortant, percé d'une ouverture apte à constituer une soupage à la surpression susceptible de régner à l'intérieur du système télescopique, et dont la membrane est constituée par la partie de joint en contact (11a) avec l'extrémité (2a) du premier élément télescopique (2) selon une compression prédéterminée en fonction du tarage de soupape à obtenir.

4. Organe de retenue selon la revendication 3, caractérisé en ce que la hauteur (P) du bossage (25) est sensiblement identique à la profondeur de l'épaulement (22).

5. Organe de retenue selon la revendication 3, caractérisé en ce que la hauteur (P) du bossage (25) est inférieure à la profondeur de l'épaulement (22).

6. Organe de retenue selon l'une des revendications 3 à 5, caractérisé en ce que l'ouverture du bossage (25) est constituée par un trou circulaire (26).

7. Organe de retenue selon l'une des revendications 3 à 5, caractérisé en ce que l'ouverture du bossage (25) est constituée par un crevé obtenu par découpe de trois côtés (27, 28, 29) d'une languette quadrangulaire (30) rabattue ensuite vers l'intérieur autour de son quatrième côté (31), pour assurer avantageusement, avec la face d'appui axiale (24) de l'épaulement (22), un maintien complémentaire, partiel du joint d'étanchéité au droit des ouvertures (32) des bossages (25).

8. Organe de retenue selon l'une des revendications 1 à 7, caractérisé en ce que le bord tombant radial (21) de la coupelle (28) comporte sur sa périphérie interne une pluralité de doigts radiaux (33) qui en sont issus, aptes à prolonger ledit bord tombant (21) jusqu'à venir en contact avec une jupe du joint (11), constituant partiellement sa partie libre (11c) en contact avec le second élément (7) du système télescopique et assurer ainsi une continuité radiale de contact respectivement du bord tombant radial (21) de la coupelle (18), de la jupe (11c) du joint (11) et du second élément (7) du système télescopique, de manière à interdire toute expulsion dudit joint (11).

9. Procédé d'assemblage d'un organe de retenue selon l'une des revendications précédentes remarquable par les étapes suivantes :
- engagement et mise en butée sur une paroi (7a) du second élément (7) du système télescopique, d'un poussoir cranté (34) apte à venir en appui sur la face d'appui radiale externe (23) de l'épaulement périphérique (22) de !a coupelle (18),
- engagement de la coupelle (18) autour du second élément (7) en indexant ses bossages (25) dans les crans (35) correspondants du poussoir (34),
- engagement du joint d'étanchéité (11) autour du second élément (7) jusqu'à sa mise en contact avec le fond interne du bord tombant (21) de la coupelle (18),
- introduction par déplacement axial du second élément (7) du système télescopique dans le premier (2),
- mise en contact de l'extrémité (2a) du premier élément (2) avec un plan d'appui (11a) du joint d'étanchéité (11) opposé à celui en contact avec le bord tombant radial (21) de la coupelle (18) et conséquemment, recouvrement de ladite extrémité (2a) par le rebord périphérique axial (19) de la coupelle (18) par coulissement,
- compression selon une valeur ("d") du joint d'étanchéité (11) jusqu'à la mise en appui de l'extrémité (2a) du premier élément télescopique (2) sur la face d'appui radiale (23) de l'épaulement périphérique (22) de la coupelle (18),
- sertissage par déformation radiale (36) ponctuelle ou périphérique du rebord axial (19) de la coupelle (18), par refoulement dans la gorge périphérique (20) ménagée à proximité de l'extrémité (2a) du premier élément télescopique (2).

## Patentansprüche

1. Halteorgan für eine gleitende ringförmige Dichtung (11) in einem Teleskopsystem (1), insbesondere für einen Kardanantrieb, bestehend aus:
- Einrichtungen zur Blockierung der Dichtung (11) am Ende (2a) eines ersten Elements (2) des Teleskopsystems (1), die aus einer ringförmigen Kappe (18) bestehen, die axial auf das Ende (2a) des ersten Elements (2) aufgesteckt ist, um einen eingeschlossenen Teil (11b) der Dichtung (11) zu Gunsten eines freien Teils (11c) zu blockieren, der mit einem zweiten Element (7) des Teleskopsystems in Kontakt ist, und zwar einerseits durch einen axialen Umfangsrand (19) der Kappe (18), der in einer Umfangsnut (20) des ersten Teleskopelements (2) verankert ist, und andererseits durch eine radiale Abwinklung (21), die von dem axialen Umfangsrand (19) ausgeht und die Dichtung (11) am Ende (2a) des ersten Elements (2) des Teleskopsystems festhält, und
- Einrichtungen zum Abführen eines Uberdrucks, der im Inneren des Teleskopsystems (1) herrschen kann,
dadurch gekennzeichnet, daß die das Halteorgan (17) bildende Kappe (18) eine einspringende Umfangsschulter (22) besitzt, die zwischen dem axialen Umfangsrand (19) der Kappe (18) und ihrer radialen Abwinklung (21) liegt und eine radiale Auflagefläche (23), die einen axialen Anschlag am Ende (2a) des ersten Teleskopelements (2) bilden kann, und eine axiale Auflagefläche (24) aufweist, die mit der radialen Abwinklung (21) den Halt der Dichtung (11) in ihrem eingeschlossenen Teil (11b) an diesem Ende (2a) gewährleisten kann.

2. Halteorgan nach Anspruch 1, dadurch gekennzeichnet, daß die Dichtung (11) in ihrem eingeschlossenen Teil (11b) gegen das Ende (2a) mit einer vorbestimmten Kompression gehalten ist, die sich aus der Differenz (d) zwischen der Dicke (L) der Dichtung in ihrem eingeschlossenen Teil und der Tiefe (1) der Umfangsschulter (22) ergibt, die gleich dem Abstand ihrer radialen Auflagefläche (23) von der Innenfläche der radialen Abwinklung (21) ist.

3. Halteorgan nach einem der Ansprüche 1 und 2, dadurch gekennzeichnet, daß die Umfangsschulter (22) wenigstens einen hohlen, hervorstehenden Buckel (25) besitzt, der mit einer Öffnung versehen ist, die ein Ventil für den Überdruck bilden kann, der im Inneren des Teleskopsystems herrschen kann, wobei die Ventilmembran von dem Dichtungsteil (11a) gebildet ist, der mit dem Ende (2a) des ersten Teleskopelements (2) unter einer vorbestimmten, von der zu erhaltenden Ventileinstellung abhängigen Kompression in Kontakt ist.

4. Halteorgan nach Anspruch 3, dadurch gekennzeichnet, daß die Höhe (P) des Buckels (25) im wesentlichen gleich der Tiefe der Schulter (22) ist.

5. Halteorgan nach Anspruch 3, dadurch gekennzeichnet, daß die Höhe (P) des Buckels (25) kleiner als die Tiefe der Schulter (22) ist.

6. Halteorgan nach einem der Ansprüche 3 bis 5, dadurch gekennzeichnet, daß die Öffnung des Buckels (25) aus einer kreisförmigen Bohrung (26) besteht.

7. Halteorgan nach einem der Ansprüche 3 bis 5, dadurch gekennzeichnet, daß die Öffnung des Buckels (25) durch Einschneiden von drei Seiten (27, 28, 29) eines viereckigen Lappens (30) gebildet ist, der anschließend um seine vierte Seite (31) nach innen gebogen ist, um in zweckmäßiger Weise mit der axialen Auflagefläche (24) der Schulter (22) einen ergänzenden partiellen Halt der Dichtung in Höhe der Öffnungen (32) der Buckel (25) zu gewährleisten.

8. Halteorgan nach einem der Ansprüche 1 bis 7, dadurch gekennzeichnet, daß die radiale Abwinklung (21) der Kappe (28) an ihrem Innenumfang mehrere von diesem ausgehende radiale Daumen (33) besitzt, die die Abwinklung (21) bis zum Kontakt mit einer Lippe der Dichtung (11) verlängern, die teilweise ihren mit dem zweiten Element (7) des Teleskopsystems in Kontakt befindlichen freien Teil (11c) bildet, und auf diese Weise einen durchgehenden radialen Kontakt zwischen der radialen Abwinklung (21) der Kappe (28), der Lippe (11c) der Dichtung (11) und dem zweiten Element (7) des Teleskopsystems gewährleistet, so daß jede Austreibung der Dichtung (11) verhindert wird.

9. Verfahren zur Montage eines Halteorgans nach einem der vorhergehenden Ansprüche, gekennzeichnet durch die folgenden Arbeitsgänge:
- Aufstecken und Inanschlagbringen eines mit Ausschnitten versehenen Stößels (34), der an der äußeren radialen Auflagefläche (23) der Umfangsschulter (22) der Kappe (18) zur Anlage kommen kann, an eine Wand (7a) des zweiten Elements (7) des Teleskopsystems,
- Aufstecken der Kappe (18) auf das zweite Element (7), in dem seine Buckel (25) in die entsprechenden Ausschnitte (35) des Stößels (34) einrasten,
- Aufstecken des Dichtungsrings (11) auf das zweite Element (7), bis er mit dem Innenboden der Abwinklung (21) der Kappe (18) in Kontakt kommt,
- Einführung des zweiten Elements (7) des Teleskopsystems in das erste (2) durch axiale Verschiebung,
- Inkontaktbringen des Endes (2a) des ersten Elements (2) mit einer ebenen Auflagefläche (11a) der Dichtung (11), die der Fläche entgegengesetzt ist, die mit der radialen Abwinklung (21) der Kappe (18) in Kontakt ist, und infolgedessen Abdeckung des Endes (2a) durch den axialen Umfangsrand (19) der Kappe (18) durch Verschieben,
- Komprimierung der Dichtung (11) um einen Wert ("d"), bis das Ende (2a) des ersten Teleskopelements (2) an der radialen Auflagefläche (23) der Umfangsschulter (22) der Kappe (18) zum Anliegen kommt, und
- Befestigung durch punktförmige oder sich über den Umfang erstreckende radiale Verformung (36) des axialen Rands (19) der Kappe (18), indem er in eine in der Nähe des Endes (2a) des ersten Teleskopelements (2) vorgesehene Umfangsnut (20) gestaucht wird.

## Claims

1. A member for retaining a sliding annular sealing joint (11) in a telescopic system (1), more particularly for cardan transmissions, and comprising:
- means for immobilizing said joint (11) against the end (2a) of a first element (2) of the telescopic system (1), said means being formed by an annular cup-like member (18) engaged axially on the end (2a) of said first element (2) to immobilize a captive portion (llb) of the joint (11) to the advantage of a free portion (11c) in contact with a second element (7) of the telescopic system via on the one hand an axial peripheral edge (19) of said cup-like member (18), said edge being anchored in a peripheral groove (20) in the first telescopic element (2), and on the other hand via a radial descending edge (21) which starts from the axial peripheral edge (19) and axially retains said joint (11) against the end (2a) of the first element (2) of the telescopic system,
- means for evacuating excess pressure which may be inside the telescopic system (1), characterized in that the cup-like member (18) forming the retaining member (17) comprises a re-entrant peripheral shoulder (22) disposed between the axial peripheral edge (19) of the cup-like member (18) and its radial descending edge (21), said shoulder (22) having a radial bearing face (23) adapted to form an axial abutment for the end (2a) of the first telescopic element (2), and an axial bearing face (24) adapted to cooperate with the radial descending edge (21) to retain the sealing joint (11) in its captive portion (11b) against said end (2a).

2. A retaining member according to claim 1, characterized in that said joint (11) is retained in its captive portion (11b) against said end (2a) with a predetermined compression resulting from the difference (d) between the thickness (L) of the joint in its captive portion and the depth (1) of the peripheral shoulder (22) which is equal to the distance between its radial bearing face (23) and the inner face of the radial descending edge (21).

3. A retaining member according to one of claims 1 or 2, characterized in that the peripheral shoulder (22) comprises at least one projecting hollow boss (25) formed with an aperture adapted to form a valve for the excess pressure liable to be inside the telescopic system, its membrane being formed by that portion of the joint (11a) which contacts the end (2a) of the first telescopic element (2) in accordance with a compression predetermined in dependence on the valve calibration to be obtained.

4. A retaining member according to claim 3, characterized in that the height (P) of the boss (25) is substantially identical with the depth of the shoulder (22).

5. A retaining member according to claim 3, characterized in that the height (P) of the boss (25) is lower than the depth of the shoulder (22).

6. A retaining member according to one of claims 3 to 5, characterized in that the aperture in the boss (25) is formed by a circular hole (26).

7. A retaining member according to one of claims 3 to 5, characterized in that the aperture in the boss (25) is formed by a slit obtained by cutting away three sides (27, 28, 29) of a square tongue (30) which is then bent down inwardly around its fourth side (31) to advantageously ensure, with the axial bearing face (24) of the shoulder (22), a complementary partial retention of the sealing joint in line with the apertures (32) in the bosses (25).

8. A retaining member according to one of claims 1 to 7, characterized in that the radial descending edge (21) of the cup-like member (28) comprises on its inner periphery a plurality of radial fingers (33) projecting therefrom which are adapted to prolong said descending edge (21) into contact with a skirt of the joint (11), partially forming its free portion (11c) in contact with the second element (7) of the telescopic system, thus ensuring a radial continuity of contact of the radial descending edge (21) of the cup-like member (18), the skirt (11c) of the joint (11) and the second element (7) of the telescopic system respectively, so as to prevent any expulsion cf said joint (11).

9. A process for the assembly of a retaining member according to one of the preceding claims, characterized by the following stages:
- the engagement and abutment with a wall (7a) of the second element (7) of the telescopic system by a notched pusher (34) adapted to bear against the outer radial bearing face (23) of the peripheral shoulder (22) of the cup-like member (18),
- the engagement of the cup-like member (18) around the second element (7) by inserting its bosses (25) in the corresponding notches (35) of the pusher (34),
- the engagement of the sealing joint (11) around the second element (7) until it contacts the inner base of the descending edge (21) of the cup-like member (18),
- the introduction by axial displacement of the second element (7) of the telescopic system in the first element (2) thereof,
- the contacting of the end (2a) of the first element (2) with a bearing plane (11a) of the sealing joint (11) opposite from that contacting the radial descending edge (21) of the cup-like member (18), and therefore the covering of said end (2a) by the axial peripheral edge (19) of the cup-like member (18) by sliding,
- the compression by a value ("d") of the sealing joint (11) until the end (2a) of the first telescopic element (2) bears against the radial bearing face (23) of the peripheral shoulder (22) of the cup-like member (18),
- the crimping by spot or peripheral radial deformation (36) of the axial edge (19) of the cup-shaped member (18), by forcing into the peripheral groove (20) provided adjacent the end (2a) of the first telescopic element (2).
